Europäisches Patentamt

European Patent Office

Office européen des brevets

(19)

(11) Numéro de publication : **0 162 756 B1**

(12) **FASCICULE DE BREVET EUROPÉEN**

(45) Date de publication du fascicule du brevet :
20.09.89

(51) Int. Cl.⁴ : **B 05 B 3/10**, B 05 B 5/04, B 32 B 17/10

(21) Numéro de dépôt : 85400802.6

(22) Date de dépôt : 24.04.85

(54) **Dispositif pour la pulvérisation d'un mélange réactionnel apte à former une couche de protection transparente de haute qualité optique.**

(30) Priorité : 02.05.84 FR 8406783

(43) Date de publication de la demande :
27.11.85 Bulletin 85/48

(45) Mention de la délivrance du brevet :
20.09.89 Bulletin 89/38

(84) Etats contractants désignés :
AT BE CH DE FR GB IT LI LU NL SE

(56) Documents cités :
FR—A— 2 320 563
GB—A— 1 311 464

(73) Titulaire : SAINT-GOBAIN VITRAGE
"Les Miroirs" 18, avenue d'Alsace
F-92400 Courbevoie (FR)

(72) Inventeur : Bravet, Jean-Louis
5 Avenue du Moulin
F-60150 Thourotte (FR)
Inventeur : de Toytot, François
15 Rue de Vogué
F-60150 Thourotte (FR)
Inventeur : Leyens, Gerd, Dr.
Im Grünental 90
Aachen (DE)
Inventeur : Pikhardt, Siegfried
Hauptstrasse 137
5106 Roetgen (DE)
Inventeur : Bayer, Herbert
von Coels-Strasse 419
Aachen (DE)

(74) Mandataire : Muller, René et al
SAINT-GOBAIN RECHERCHE 39, quai Lucien Lefranc
F-93304 Aubervilliers (FR)

EP 0 162 756 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention est relative à la fabrication d'articles transparents de haute qualité optique tels des vitrages pour véhicule à moteur, pour bâtiment, etc... comprenant un support monolithique ou feuilleté en verre et/ou en matière plastique revêtu sur au moins une de ses faces d'une couche de revêtement ou protection en matière plastique. L'invention concerne plus particulièrement un dispositif pour le revêtement du support en verre ou en matière plastique par pulvérisation d'un mélange de composants réactionnels apte à former la couche de protection.

Des articles transparents, notamment des vitrages, munis d'une couche de protection en matière plastique ont déjà été décrits dans de nombreuses publications. Ainsi dans les publications de brevets français 2 251 608 et 2 316 913 on a décrit des vitrages formés d'un support en verre revêtu d'une couche de matière plastique présentant des propriétés d'antilacération d'une part, et des propriétés dites de surface d'autre part, en particulier de résistance à la rayure et à l'abrasion. Dans la publication du brevet français 2 320 563 on a décrit des articles de haute qualité optique formé d'un support en matière plastique recouvert de cette même couche de matière plastique ayant des propriétés de résistance à la rayure et à l'abrasion.

La couche de protection utilisée dans ces diverses applications est formée essentiellement d'un polyuréthane thermodurcissable et elle peut être fabriquée au préalable par coulée réactive sur un support plan, d'un mélange de composants apte à former le polyuréthane, ladite couche étant ensuite assemblée par collage à l'article à revêtir.

La couche peut encore être formée, lorsque l'article s'y prête, par coulée directement sur l'article ou, par trempage de l'article dans un bain contenant le mélange réactionnel, ou encore par pulvérisation du mélange réactionnel sur l'article. Mais dans ce cas, la pulvérisation à l'aide de pistolets de pulvérisation ne donne pas entièrement satisfaction. Ce type de pulvérisation ne fournit généralement pas une couche d'épaisseur homogène et de bonne qualité optique, exempte de « peau d'orange », à cause notamment des différences de viscosité des composants formant le mélange réactionnel à pulvériser. Par ailleurs ces différences ne peuvent être atténuées par l'usage d'un solvant car ce dernier est souvent incompatible avec la matière plastique à recouvrir, par exemple le polycarbonate, et peut aussi entraîner des nuisances au cours de la fabrication de la couche.

Dans un domaine technique différent de celui des couches transparentes pour vitrages feuilletés, on connaît d'après le document GB-A-1 311 464, une tête de pulvérisation centrifuge pour la pulvérisation d'un mélange de deux peintures.

Le problème technique consiste donc à trouver un dispositif de revêtement d'un article transparent notamment un vitrage, en verre ou en matière plastique de haute qualité optique, qui, par pulvérisation d'un mélange de composants réactionnels sur l'article transparent permet la formation d'une couche de revêtement homogène et de haute qualité optique.

Par haute qualité optique, on entend selon l'invention la qualité optique nécessaire à une utilisation du vitrage dans l'industrie automobile par exemple.

Le problème technique est résolu par le dispositif de revêtement selon l'invention, qui consiste en une ligne de revêtement comprenant un convoyeur pour le transfert de l'article à revêtir, des moyens de pulvérisation, des moyens de polymérisation de la couche obtenue par pulvérisation et dans lequel les moyens de pulvérisation sont équipés d'une tête de pulvérisation comprenant un bol tournant, un plateau tournant et une partie fixe percée de conduits pour l'apport des composants dans la partie centrale du plateau et leur mélange dans la tête de pulvérisation, le plateau tournant portant des aspérités ou nervures et/ou le bol présentant une surface interne dont la génératrice est ondulée afin d'augmenter la longueur du parcours du mélange.

Pour éviter une polymérisation prématurée, on effectue le mélange directement dans la tête de pulvérisation.

Selon la nature du support à recouvrir, il peut être nécessaire d'effectuer un traitement préalable dudit support, avant de le recouvrir.

Ainsi, lorsque le support est en matière plastique par exemple en polycarbonate ou en polyméthacrylate de méthyle, sous un des aspects de l'invention on traite thermiquement le support à une température comprise entre 60°C et 120°C durant un temps suffisant, de l'ordre de 10 minutes à 1 heure par exemple. Ce traitement thermique améliore le nappage de la couche durant sa formation.

Lorsque le support est en verre et éventuellement en matière plastique, sous un autre aspect de l'invention, on peut avantageusement traiter chimiquement au préalable ce support en recouvrant sa surface d'un promoteur d'adhésion tel un organo-silane afin d'améliorer l'adhésion de la couche de protection formée ultérieurement.

Sous un autre aspect avantageux de l'invention, lorsque le mélange réactionnel est susceptible de polymériser sous l'action de la chaleur on améliore encore le nappage de la couche en formation en effectuant la pulvérisation alors que le support à revêtir est chaud. Ainsi lorsqu'il s'agit de former une couche de polyuréthane thermodurcissable comme décrit par la suite, le meilleur nappage est obtenu lorsque la température du support est comprise entre 25°C et 60°C environ.

Sous un autre aspect de l'invention, le traitement thermique du support lorsque celui-ci est en polycarbonate par exemple, est précédé par un nettoyage à l'alcool de la surface à recouvrir. Ce nettoyage à l'alcool peut avoir pour but d'éliminer toute trace d'huile ou d'autres impuretés pouvant subsister sur la surface du support suite au démoulage lorsque le support est moulé. Le nettoyage est indispensable lorsque le support à revêtir, en polycarbonate par exemple, est muni de bandes ou de motifs sérigraphiés ; ce nettoyage améliore encore le nappage ultérieur de la couche pulvérisée. L'alcool utilisé pour le nettoyage peut être de l'éthanol ou de l'isopropanol par exemple.

Le mélange réactionnel utilisé pour la pulvérisation selon l'invention est un mélange à deux composants susceptibles de former une couche de polyuréthane, notamment une couche de polyuréthane autocicatrisable ayant des propriétés de résistance à la rayure et à l'abrasion.

Des exemples de monomères qui conviennent pour la préparation de ces polyuréthanes sont d'une part les isocyanates difonctionnels aliphatiques comme le 1,6-hexanediisocyanate, le 2,2,4-triméthyl-1,6-hexanediisocyanate, le 2,2,4-triméthyl-1,6-hexanediisocanate, le 1,3-bis (isocyanato-méthyl)benzène, le bis (4-isocyanatocyclo-hexyl)méthane, le bis (3-méthyl-4-isocyanatocy-clohexyl)méthane, le 2,2-bis (4-isocyanatocyclo-hexyl)propane et le 3-isocyanatométhyl-3,5,5-tri-méthylcyclohexylisocyanate, ainsi que des biurets, isocyanurates, et prépolymères de ces composés ayant une fonctionnalité de 3 ou davantage et d'autre part les polyols polyfonctionnels, comme les polyols ramifiés tels que les polyester-polyols et polyétherpolyols obtenus par réaction d'alcools polyfonctionnels, notamment le 1,2,3-propanetriol (glycérol), le 2,2-bis (hydroxymé-thyl)-1-propanol (triméthyloléthane), le 2,2-bis (hydroxyméthyl)-1-butanediol (triméthylolpropane), le 1,2,4-butanetriol, le 1,2,6-hexanetriol, le 2,2-bis (hydroxyméthyl)-1,3-propanediol (pentaé-rythritol) et le 1,2,3,4,5,6-hexanehexol (sorbitol), avec des diacides aliphatiques comme l'acide malonique, l'acide succinique, l'acide glutarique, l'acide adipique, l'acide subérique et l'acide séba-cique ou avec des éthers cycliques, comme l'oxyde d'éthylène, l'oxyde de 1,2-propylène et le tétrahydrofurane ou encore des polycaprolacto-ne-polyols.

En tant que composant polyol, on peut encore utiliser un mélange d'au moins un diol long tel un polyesterdiol ou un polyétherdiol de masse moléculaire comprise entre 500 et 4000, et d'au moins un diol court et aussi le cas échéant d'au moins un polyol de fonctionnalité égale ou supérieure à trois.

Lorsque l'on désire obtenir une couche de revêtement ayant des propriétés améliorées de résistance à la buée, on peut encore choisir en tant que composant polyol un polyol plurifonctionnel présentant des chaînes éthoxy-propoxy, notamment un polyol difonctionnel comprenant 5 à 17 % en poids de radicaux OH, de poids moléculaire moyen compris entre 200 et 600 environ et comprenant environ 80 % en poids de radicaux éthoxy dans la chaîne éthoxy-propoxy. Ce polyol difonctionnel entre dans le mélange polyol-isocyanate à raison de 25 à 70 % en poids environ dudit mélange. Le polyol plurifonctionnel peut aussi être un polyol de fonctionnalité supérieure à 2 comprenant 0,4 à 14 % en poids de radicaux OH, de poids moléculaire moyen compris entre 500 et 15000 environ et comprenant 50 à 90 % en poids environ de radicaux éthoxy dans les chaînes éthoxy-propoxy. Ce polyol entre dans le mélange polyol-isocyanate à raison de 30 à 90 % en poids environ dudit mélange. Le polyol trifonctionnel est de préférence un polyétherpolyol à base de triméthylolpropane ou de glycérol et d'oxyde de propylène, ou un lactonepolyesterpolyol à base de triméthylolpropane ou de glycérol et d'ε-caprolactone. Le polyol polyfonctionnel peut encore être un polyol tétrafonctionnel comprenant 0,7 à 14 % en poids de radicaux OH, de poids moléculaire moyen compris entre 500 et 10000 environ et comprenant 10 à 80 % en poids environ de radicaux éthoxy dans les chaînes éthoxy-propoxy.

La pulvérisation centrifuge à grande vitesse selon l'invention permet d'obtenir un mélange réactionnel homogène à partir de composants de viscosités très différentes. Ainsi, il n'est pas nécessaire comme indiqué précédemment d'utiliser des solvants d'ailleurs souvent incompatibles avec la matière du support à recouvrir, pour compenser ces différences de viscosité. En outre, la pulvérisation centrifuge fournit une couche d'épaisseur homogène. Elle permet encore de pulvériser un mélange coloré en plaçant le colorant dans un des deux composants ou dans les deux.

Dans une variante, la pulvérisation centrifuge est une pulvérisation électrostatique connue en soi, la pulvérisation centrifuge s'effectuant alors dans un champ électrique.

Le dispositif selon l'invention s'applique également à la fabrication d'une couche de protection d'une couche molle en matière plastique présentant des propriétés d'absorbeur d'énergie utilisée par exemple dans les vitrages feuilletés de sécurité.

Ces vitrages feuilletés de sécurité, utilisés notamment comme pare-brise de véhicule, comprennent un support rigide transparent en verre de silicate, une couche de matière plastique ayant des propriétés d'absorbeur d'énergie (couche AE) et une couche de revêtement en matière plastique ayant des propriétés de surface notamment de résistance à la rayure et à l'abrasion, dite couche de protection interne (couche PI). De tels vitrages ont déjà été décrits dans plusieurs publications de brevets, par exemple dans les publications de brevets français 2 134 255, 2 398 606 ou encore dans la publication de brevet européen 0 054 491. La couche de recouvrement ayant des propriétés de surface utilisée dans ces vitrages feuilletés est par exemple celle décrite dans les publications de brevets français 2 187 719 et 2 251 608 déjà cité. Cette couche a dans les conditions normales de température, une haute capacité de déformation élastique, un faible module d'élasticité, inférieur à 2000 daN/cm² et de préférence inférieur à 200 daN/cm², et un allongement à la rupture de plus de 60 % avec moins de 2 % de déformation plastique et de préférence un allongement à la rupture de plus de 100 % avec moins de 1 % de déformation plastique. Les couches préférées de ce type sont des polyuréthanes thermodurcissables ayant un module d'élasticité d'environ 25 à 200 daN/cm$^2$ et un allongement d'environ 100 à 200 % avec moins de 1 % de déformation plastique.

Le dispositif selon l'invention s'applique avantageusement à la fabrication de la couche de protection interne décrite ci-dessus par pulvérisation du mélange réactionnel adéquat sur l'ébauche de vitrage comprenant déjà le support en verre et la couche AE.

L'invention concerne donc un dispositif constituant une ligne pour le revêtement d'articles transparents de haute qualité optique par pulvérisation centrifuge d'un mélange de composants réactionnels sur l'article en vue de former une couche de protection présentant notamment des propriétés de surface.

La ligne de revêtement se répartit en plusieurs zones : une zone de pulvérisation, une zone de polymérisation de la matière apportée et le cas échéant une zone de traitement thermique ou chimique préalable pour l'article à revêtir.

Suivant une réalisation avantageuse du dispositif, l'ensemble de la ligne de traitement est placé dans une longue enceinte divisée en compartiments correspondant aux différentes zones.

Les moyens pour préparer le support avant la pulvérisation peuvent être des moyens de chauffage pour le traitement thermique préalable des articles à revêtir lorsqu'il s'agit d'articles en matière plastique. Ces moyens peuvent être des rampes infra-rouge, capables de chauffer les produits à revêtir à une température supérieure à 100°C.

Suivant une réalisation de la ligne de revêtement, le pulvérisateur à tête tournante à grande vitesse est un pulvérisateur à bol tournant à une vitesse pouvant être comprise entre 1000 et 80000 tours/min. Un bol tournant de ce type, décrit plus en détail par la suite, fournit une pulvérisation homogène et fine.

Lorsque la ligne de traitement est utilisée pour revêtir des supports en verre, les moyens pour préparer le support peuvent être des moyens pour traiter chimiquement ledit support à l'aide d'un promoteur d'adhésion tel un organo-silane.

Suivant une forme de réalisation, la ligne de traitement peut comprendre en outre des moyens pour le nettoyage des articles à l'aide d'un alcool approprié avant le traitement thermique le cas échéant.

Pour éviter des défauts optiques de la couche de revêtement dus à la présence de corps étrangers, la ligne de traitement peut encore comprendre des moyens empêchant les grains de poussières et autres particules de se déposer sur le support à recouvrir, avant la pulvérisation ou sur la couche obtenue par pulvérisation, et aussi des moyens de nettoyage pour éliminer ces grains de poussières éventuellement déposés.

Les moyens pour éviter le dépôt de particules indésirables peuvent être des écrans physiques. Ainsi on peut placer l'ensemble de la ligne de traitement, ou des parties de cette ligne, dans une ou plusieurs enceintes contenant de l'air filtré et dépoussiéré. On peut encore placer chaque article revêtu de la couche pulvérisée dans une enceinte particulière, telle une cage de verre, après la pulvérisation.

Les moyens pour éviter le dépôt de particules peuvent être aussi des barres électrostatiques qui ionisent l'atmosphère autour de l'article à revêtir ou revêtu.

Dans la variante mettant en jeu une pulvérisation électrostatique, le dispositif comprend un pulvérisateur adapté en conséquence.

D'autres caractéristiques et avantages ressortiront de la description suivante d'exemples du dispositif selon l'invention.

La figure 1 représente schématiquement une ligne pour le revêtement de vitrages en matière plastique.

La figure 2 représente, en section, une tête de pulvérisation.

La figure 3 représente schématiquement une ligne pour le revêtement de vitrages en verre.

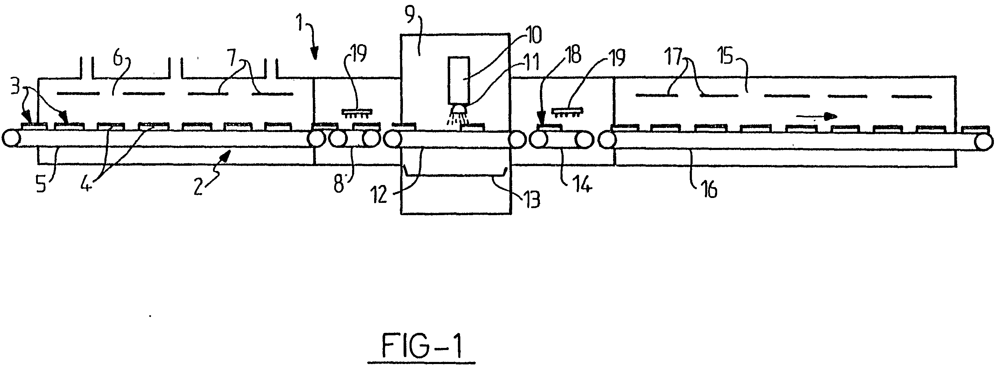

La ligne de revêtement représentée sur la figure 1 est utilisée notamment pour le revêtement de vitrages en matière plastique ; elle est constituée d'une longue enceinte 1 découpée en compartiments correspondant aux zones de traitement, et traversée par un convoyeur 2 formé également de plusieurs parties pour le transport des articles 3. Les articles sont disposés horizontalement sur des supports adaptés à leur forme. La partie amont 5 du convoyeur formée d'un tapis sans fin, transporte les articles à travers le compartiment 6 correspondant à la zone de traitement thermique préalable. Ce compartiment 6 est équipé de moyens de chauffage 7 disposés en surplomb du convoyeur. Ces moyens de chauffage sont ici des rampes à infra-rouge capables de porter les articles à une température de l'ordre de 80 à 120°C.

Une partie intermédiaire 8 du convoyeur transporte les articles du compartiment de traitement thermique 6 au compartiment 9 correspondant à la zone de pulvérisation. Durant ce transport intermédiaire les articles sont refroidis pour atteindre la température nécessaire à la pulvérisation c'est-à-dire comprise entre 25 et 60°C. La zone de pulvérisation est formée d'une cabine étanche aux poussières et autres particules comme les autres éléments de l'enceinte 1 : cette zone est équipée de moyens de pulvérisation centrifuge 10 dont la tête 11 comprend un bol tournant à grande vitesse, comme décrit par la suite. Sous le tapis à câbles 12 formant la partie du convoyeur dans la zone de pulvérisation, est disposé un réservoir 13 qui recueille l'excédent du mélange réactionnel pulvérisé.

Un autre transporteur intermédiaire 14 effectue le transfert des articles revêtus jusqu'au tunnel 15 correspondant à la zone de polymérisation. Dans cette zone, les articles transportés par la partie aval du convoyeur constitué également d'un tapis sans fin 16, sont chauffés par des moyens de chauffage tels des résistances électriques 17 qui assurent la polymérisation de la couche de revêtement 18 obtenue par pulvérisation.

La ligne de traitement comprend, en divers emplacements, des moyens pour éliminer l'électricité statique dans l'environnement des articles à revêtir ou revêtus par la couche pulvérisée. Ces moyens peuvent être des barres électrostatiques 19 connues en soi.

La ligne peut aussi comprendre des moyens de nettoyage (non représentés) pour éliminer les poussières et autres particules déposées sur l'article à revêtir ou revêtus.

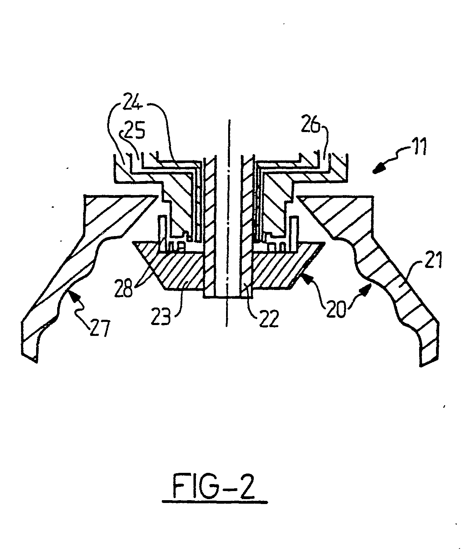

La tête 11 du dispositif de pulvérisation centrifuge à grande vitesse représentée sur la figure 2 comporte une partie mobile 20 constituée du bol tournant 21 proprement dit, solidaire d'un mandrin 22 porteur d'un plateau 23, et d'une partie fixe 24 percée de deux conduits 25 et 26 d'alimentation pour les composants, ces conduits débouchant dans la partie centrale du plateau 23.

Afin d'augmenter la longueur du parcours pour le mélange des deux composants introduits par les conduits 25 et 26 et aussi améliorer ce mélange avant la pulvérisation, le bol présente une surface interne 27 dont la génératrice est ondulée d'une part, et le plateau 23 porte des aspérités ou nervures 28 dirigées vers le haut formant chicanes, d'autre part.

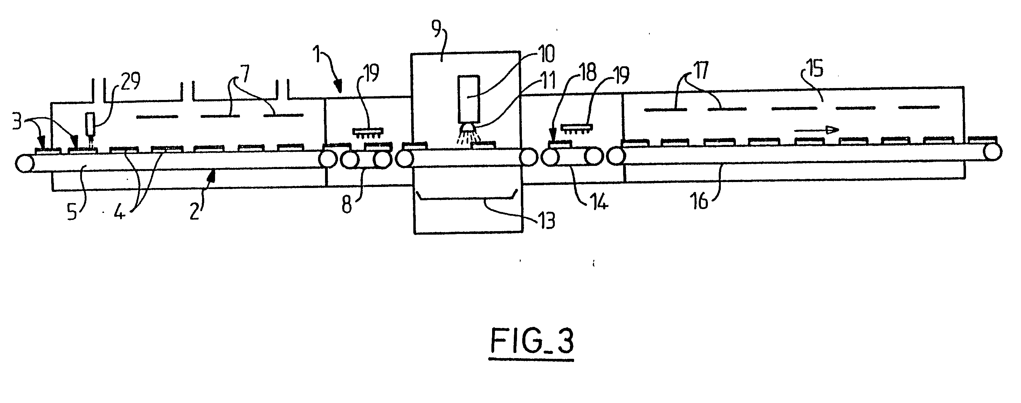

La figure 3 représente une ligne pour le revêtement de vitrages en verre. Elle comprend les mêmes éléments que la ligne décrite précédemment sauf que le compartiment pour le traitement préalable est muni en outre de moyens pour recouvrir la surface du support par un agent convenable tel un promoteur d'adhésion. Ces moyens peuvent être un pistolet pulvérisateur 29.

Le fonctionnement des dispositifs est décrit par la suite en relation avec des exemples de revêtement consistant à revêtir des vitrages en polycarbonate et en verre par une couche d'un polyuréthane thermodurcissable.

Exemple 1

Le mélange à pulvériser, apte à donner une couche de polyuréthane thermodurcissable est formé à partir d'un composant polyol et d'un composant isocyanate en présence d'un stabilisant, d'un catalyseur et d'un agent nappant, pris dans les proportions suivantes :

100 g d'un polyétherpolyol d'un poids moléculaire d'environ 450 obtenu par condensation d'oxyde de 1,2-propylène avec du 2,2-bis (hydroxyméthyl)-1-butanol et ayant une teneur en radicaux hydroxyles libres d'environ 10,5 à 12 %.

5,2 g d'un stabilisant aux ultra-violet, 0,05 g d'un catalyseur, à savoir du dilaurate de dibutylétain et 0,2 g d'un ester fluoroalkylé en tant qu'agent nappant.

102 g d'un biuret de 1,6-hexanediisocyanate ayant une teneur en radicaux isocyanates libres d'environ 23,2 %.

Le composant polyol présente une viscosité d'environ 620 centipoises à 25°C alors que le composant isocyanate présente une viscosité d'environ 2300 centipoises. Le composant polyol est mélangé au préalable avec le stabilisant, le catalyseur et l'agent nappant.

Les vitres de custode en polycarbonate préalablement nettoyées avec de l'isopropanol, sont disposées horizontalement sur des supports adaptés à la forme des vitres et cachant notamment leur face inférieure. Le convoyeur transporte les articles 3 disposés sur leur support 4 dans le compartiment 6 correspond à la zone de traitement thermique, où ils sont portés par passage sous les rampes infra-rouge 7 à une température de 100°C environ durant 20 minutes. Les vitres et leur support sont ensuite amenés dans le compartiment de pulvérisation 9. Durant le parcours intermédiaire, la température des vitres décroît jusqu'à environ 40°C. Au poste de pulvérisation, les vitres reçoivent une pulvérisation du mélange réactionnel décrit précédemment. La pulvérisation centrifuge s'effectue alors que le mélange réactionnel est à environ 25°C, à l'aide du bol tournant à une vitesse d'environ 20000 tours/min, le diamètre du bol étant d'environ 90 mm. Les supports protègent la face inférieure des vitres des particules pulvérisées.

On forme ainsi une couche 18 d'environ 50 $\mu$m. L'article revêtu est ensuite acheminé dans le tunnel de polymérisation 15 où il est soumis pendant une durée de 20 minutes à une température de 100°C.

L'article revêtu présente en bout de ligne une excellente qualité optique. Sa résistance à la rayure est mesurée d'après le test connu sous l'appellation « Mar resistance test » pratiqué avec l'appareil ERICHSEN, type 413. On mesure la charge à porter sur une tête diamantée pour introduire une rayure persistante sur la couche de matière plastique de revêtement.

La résistance à la rayure est ici de 20 g, alors qu'une plaque de polycarbonate non revêtue présente une résistance à la rayure de 2 à 3 g seulement.

On mesure la résistance à l'abrasion de la couche formée selon la norme européenne R 43. A cet effet, on fait subir à un échantillon recouvert par la couche de protection une abrasion à l'aide d'une meule abrasive. Après 100 tours d'abrasion, on mesure avec un spectromètre l'écart de flou entre la partie abrasée et la partie son abrasée. L'écart de flou ($\Delta$ flou) doit être inférieur à 4 % pour que la couche ait la qualité anti-abrasive.

Le test à l'abrasion donne ici un écart de flou après abrasion de 3,5 %

Exemple 2

On recouvre des plaques planes de polycarbonate utilisées comme vitrage bâtiment, en opérant dans les mêmes conditions que dans l'exemple 1.

On forme ainsi une couche de 50 $\mu$m de polyuréthane ayant des propriétés de surface, telles que résistance à la rayure et résistance à l'abrasion.

Les plaques revêtues présentent après polymérisation de la couche une excellente qualité optique.

## Exemple 3

On recouvre des vitrages plan en verre en mettant en oeuvre le dispositif décrit en relation avec la figure 3. A cet effet on traite au préalable le support en verre en le recouvrant d'un promoteur d'adhésion à l'aide du pistolet de pulvérisation 29.

Les supports traités sont amenés dans le compartiment de pulvérisation 9. Au poste de pulvérisation, les vitrages reçoivent une pulvérisation du mélange réactionnel décrit dans l'exemple 1 dans les mêmes conditions opératoires. On forme ainsi une couche de 50 μm d'épaisseur qui après polymérisation constitue un film anti-éclat.

## Exemple 4

On opère dans les mêmes conditions que dans l'exemple 3, sauf qu'après formation de la couche de protection, on forme une deuxième couche par pulvérisation centrifuge, de la même façon, afin d'augmenter l'épaisseur globale du film de protection et par là son caractère anti-éclat.

## Exemple 5

On opère dans les mêmes conditions que dans l'exemple 4, sauf qu'on pulvérise un mélange réactionnel contenant en outre un agent colorant adéquat. On obtient un vitrage recouvert d'une couche anti-éclat lui conférant en outre une coloration.

## Exemple 6

On opère dans les mêmes conditions que dans l'exemple 1 pour recouvrir des optiques de phares en polycarbonate. Le produit revêtu obtenu présente de très bonnes propriétés optiques.

## Exemple 7

Par le procédé de l'invention, on forme une couche de matière plastique ayant des propriétés de surface de 70 μm d'épaisseur sur la couche de matière plastique ayant des propriétés d'absorbeur d'énergie de 0,6 mm d'épaisseur d'un vitrage formé de ladite couche de matière plastique et d'une feuille de verre de 3 mm d'épaisseur. Le mélange réactionnel que l'on pulvérise étant celui décrit dans l'exemple 1.

Le vitrage obtenu présente une bonne qualité optique et il peut être utilisé en tant que pare-brise de sécurité pour véhicule à moteur.

## Exemple 8

Par le procédé de l'invention, on pulvérise un mélange de 100 g d'un biuret de 1,6-hexaméthylè- nediisocyanate ayant une teneur en radicaux NCO libres de 23 % avec 164 g d'un polyol à base d'éthylèneglycol et d'oxyde d'éthylène/oxyde de propylène (rapport pondéral 60/40, répartition statistique, ayant une teneur en radicaux OH libres de 5,7 % et un poids moléculaire moyen d'environ 600 g. On ajoute au polyol 0,07 g de dilaurate de dibutylétain comme catalyseur.

Le support à revêtir est une feuille de verre trempée apte à être utilisée comme lunette arrière d'un véhicule à moteur.

Par la mise en oeuvre du dispositif décrit en relation avec la figure 3, on forme une couche de 50 μm d'épaisseur qui après polymérisation présente des propriétés de surface et en outre de résistance à la buée améliorées.

## Revendications

1. Dispositif de revêtement d'un article transparent de haute qualité optique, notamment un vitrage (3) en verre et/ou en matière plastique, par pulvérisation d'un mélange de composants réactionnels sur l'article transparent en vue de former une couche de protection (18) homogène, de haute qualité optique, consistant en une ligne de revêtement comprenant un convoyeur pour le transfert de l'article à revêtir, des moyens de pulvérisation, des moyens de polymérisation (16) de la couche obtenue par pulvérisation, dans lequel les moyens de pulvérisation (10) sont équipés d'une tête de pulvérisation (11) comprenant un bol tournant (21), un plateau tournant (18) et une partie fixe percée de conduits pour l'apport des composants dans la partie centrale du plateau et leur mélange dans la tête de pulvérisation, le plateau (23) portant des aspérités ou nervures et/ou le bol présentant une surface interne (22) dont la génératrice est ondulée afin d'augmenter la longueur du parcours du mélange.

2. Dispositif selon la revendication 1, caractérisé en ce qu'il comprend en outre des moyens (7, 29) pour traiter au préalable le support à revêtir.

3. Dispositif selon une des revendications 1 à 2, caractérisé en ce qu'il comprend une enceinte (1) divisée en plusieurs compartiments (6, 9, 15) s'étendant sur toute la ligne de traitement.

4. Dispositif selon une des revendications 1 à 3, caractérisé en ce qu'il comprend des moyens de nettoyage pour éliminer les poussières et autres particules.

5. Dispositif selon une des revendications 1 à 4, caractérisé en ce qu'il comprend des moyens (19) pour éliminer l'électricité statique.

6. Dispositif selon une des revendications 1 à 5, caractérisé en ce qu'il s'applique à la formation d'une couche de polyuréthane présentant des propriétés de surface telles que résistance à la rayure et à l'abrasion, notamment de polyuréthane thermodurcissable.

7. Dispositif selon la revendication 6, caractérisé en ce qu'il s'applique à la formation d'une couche de polyuréthane présentant des propriétés de résistance à la buée.

8. Dispositif selon une des revendications 1 à 7, caractérisé en ce qu'il s'applique à la formation d'une couche de polyuréthane présentant des propriétés de surface sur une couche de polyuréthane présentant des propriétés d'absorbeur d'énergie.

## Claims

1. Apparatus for coating a high optical quality transparent article, particularly a glazed structure (3) made from glass and/or a plastics material, by spraying a mixture of reaction components onto the transparent article with a view to forming a high optical quality, homogeneous protective layer (18), consisting of a coating line incorporating a conveyor for the transfer of the article to be coated, spraying means, means (16) for polymerizing the coating obtained by spraying and in which the spraying means (10) are equipped with a spraying head (11) having a rotary bowl (21), a rotary plate (18) and a fixed part perforated by pipes for the supply of components to the central part of the plate and their mixing in the spraying head, the plate (23) having roughnesses or ribs and/or the bowl having an inner surface (22), whose generatrix undulates in order to increase the length of the path of the mixture.

2. Apparatus according to claim 1, characterized in that it also comprises means (7, 29) for the prior treatment of the support to be coated.

3. Apparatus according to one of the claims 1 and 2, characterized in that it comprises an enclosure (1) divided into several compartments (6, 9, 15) extending over the entire processing line.

4. Apparatus according to one the claims 1 to 3, characterized in that it comprises cleaning means for removing dust and other particles.

5. Apparatus according to one of the claims 1 to 4, characterized in that it comprises means (19) for eliminating electricity.

6. Apparatus according to one of the claims 1 to 5, characterized in that it applies to the formation of a polyurethane layer having surface properties such as resistance to scratching and abrasion and in particular constituted by thermosetting polyurethane.

7. Apparatus according to claim 6, characterized in that it applies to the formation of a polyurethane layer having mist or vapour-resisting properties.

8. Apparatus according to one of the claims 1 to 7, characterized in that it applies to the formation of a polyurethane layer having surface properties on a polyurethane layer having energy absorbing porperties.

## Patentansprüche

1. Vorrichtung zum Beschichten eines transparenten Gegenstandes von hoher optischer Qualität, insbesondere einer Verglasung (3) aus Glas und/oder aus Kunststoff, durch Aufstäuben einer Mischung aus Reaktionsbestandteilen auf den transparenten Gegenstand zur Bildung eines homogenen Schutzüberzugs (18) von hoher optischer Qualität, bestehend aus einer Beschichtungsstraße mit einem Förderer zur Zufuhr des Gegenstandes zum Beschichten, mit einer Aufstäubungseinrichtung, einer Einrichtung (16) zur Polymerisation des durch das Aufstäuben erhaltenen Überzugs, wobei die Aufstäubeinrichtungen (10) mit einem Zerstäubungskopf (11) versehen sind, der eine Drehschale (21), eine Drehplatte (18) und ein mit Leitungen für die Zufuhr der Bestandteile in den mittleren Teil der Platte und für deren Mischung im Zerstäubungskopf vorgesehenes festes Teil aufweist, wobei die Platte (23) Erhebungen oder Rippen aufweist und/oder die Schale eine innere Fläche (22) aufweist, deren Erzeugende gewellt ist, um die Durchlaufstrecke der Mischung zu erhöhen.

2. Vorrichtung nach Anspruch 1, dadurch gekennzeichnet, daß sie zusätzlich Vorrichtungen (7, 29) enthält, um zuvor die zu beschichtende Unterlage zu behandeln.

3. Vorrichtung nach einem der Ansprüche 1 bis 2, dadurch gekennzeichnet, daß sie ein Gehäuse (1) aufweist, welches in mehrere Abschnitte (6, 9, 15) unterteilt ist, welche sich über die gesamte Behandlungsstrecke erstrecken.

4. Vorrichtung nach einem der Ansprüche 1 bis 3, dadurch gekennzeichnet, daß sie eine Reinigungsvorrichtung (19) zum Enfernen von Staub und anderen Teilchen aufweist.

5. Vorrichtung nach einem der Ansprüche 1 bis 4, dadurch gekennzeichnet, daß sie eine Einrichtung (19) zur Beseitigung einer statischen Aufladung enthält.

6. Vorrichtung nach einem der Ansprüche 1 bis 5, dadurch gekennzeichnet, daß sie zur Bildung eines Polyurethanüberzugs, insbesondere aus einem wärmehärtbaren Polyurethan, verwendet wird, der Oberflächeneigenschaften wie Kratzfestigkeit und Abriebfestigkeit aufweist.

7. Vorrichtung nach Anspruch 6, dadurch gekennzeichnet, daß sie zur Bildung eines Polyurethanüberzugs mit Antibeschlagseigenschaften verwendet wird.

8. Vorrichtung nach einem der Ansprüche 1 bis 7, dadurch gekennzeichnet, daß sie zur Bildung eines Polyurethanüberzugs verwendet wird, der Oberflächeneigenschaften auf einem energieabsorbierenden Polyurthanüberzug aufweist.

FIG-1

EP 0 162 756 B1

## FIG-2

FIG_3

3